# EUROPEAN PATENT SPECIFICATION

(11) **EP 0 326 374 B1**
(45) Date of publication and mention of the grant of the patent: **29.09.1993**
(21) Application number: 89300735.1
(22) Date of filing: 26.01.1989
(51) Int. Cl.: H02K 35/04, G11B 21/02, H02K 41/035

(54) **A moving coil linear motor**
Linearmotor mit beweglicher Spule
Moteur linéaire avec bobine mobile

(30) Priority: 27.01.1988 JP 16270/88
(43) Date of publication of application: 02.08.1989
(73) Proprietor: SONY CORPORATION, Tokyo 141 (JP)
(72) Inventor: Eguchi, Naoya c/o Patents Division, Shinagawa-ku Tokyo 141 (JP)
(74) Representative: Purvis, William Michael Cameron

(56) References cited:
- EP-A- 0 212 697
- EP-A- 0 222 362
- GB-A- 2 162 698
- WIRELESS WORLD vol. 88, no. 1556, May 1982, pages 70-75, Sheepen Place, Olchester, GB; J. R. WATKINSON: "Disc Drive Positioners"

## Description

The invention relates to a moving coil linear motor.

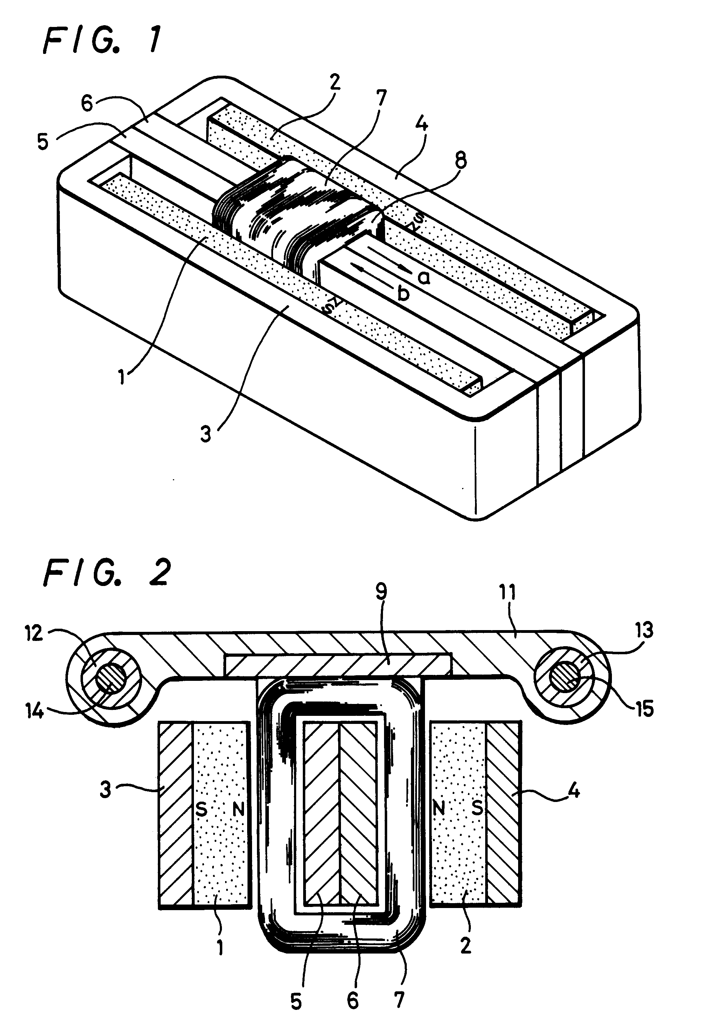

A moving coil linear motor has been previously proposed as shown in Figures 1 and 2 of the accompanying drawings.

In Figures 1 and 2, magnets 1 and 2 are each magnetized in the thickness direction thereof and are fixed to the insides of yokes 3 and 4 which have their ends bent such that the same polarities face each other. Yokes 5 and 6 both penetrate a bobbin 8 on which a moving coil 7 is wound and are integrated with the yokes 3 and 4 to form an "8" shape extended in the lateral direction. A slide base plate 11 has the coil 7 fixed on its bottom face by way of a support member 9. The slide base plate 11 is provided with slide bearings 12 and 13 on the sides thereof and in which guide shafts 14 and 15 are engaged.

In the above-mentioned constructions, energization of the coil 7 causes the current flowing in the coil 7 to act against the flux of the magnets 1 and 2 thereby to generate a thrust which moves the coil 7 and consequently the slide base plate 11 in the direction a or the direction b. Such a linear motor may be employed as, for example, an optical pickup moving device in an optical disc player.

In the above-mentioned previously proposed linear motor, since the coil 7 which generates the thrust is supported by the guide shafts 14 and 15 through the slide base plate 11, the overall size and weight of the moving portion must be large and accordingly the thrust/weight ratio is small, thereby making it impossible to produce very high acceleration. Further, a lower mechanical resonance frequency of the moving system restricts the frequency bandwidth of the servo system to be narrow.

For this reason, previously proposed linear motors have had the problem that stable operation at high speed has been difficult to obtain.

Patent Specification EP-A-0 212 697 discloses a device for translating a slide wherein the slide incorporates bearing sleeves which are longitudinally slidable on a pair of parallel guide rods, at least one of the bearing sleeves permitting movement of the slide in directions orthogonal to the longitudinal direction of the guide rods.

According to the invention there is provided a moving coil linear motor in which two parallel spaced yokes are arranged each parallel and opposite to a respective magnet magnetized in the thickness direction thereof, each of the yokes penetrates a respective through-hole of a bobbin on which at least one coil is wound, and the coil or coils can be energized to drive the bobbin:
characterized in that surfaces of the yokes and opposing surfaces of the through-holes of the bobbin are spaced apart and are each provided with a respective guide groove extending longitudinally of the respective surface, rolling elements are received in the guide grooves, and the bobbin is supported on the yokes by the rolling elements.

Such a linear motor can be small and light and can operate stably at a high speed.

The invention is diagrammatically illustrated by way of example in the accompanying drawings, in which:-
Figures 1 and 2 are respectively a perspective view and a cross-sectional view showing the construction of a linear motor of previously proposed kind;
Figures 3 and 4 are respectively a perspective view and a plan view showing the construction of a first embodiment of a moving coil linear motor according to the invention;
Figures 5 and 6 are cross-sectional views taken on lines III-III and IV-IV of Figure 4 respectively;
Figure 7 is a partly cut-away perspective view showing a bobbin of the first embodiment of the invention;
Figure 8 is a perspective view showing a second embodiment of a moving coil linear motor according to the invention;
Figure 9 is a cross-sectional view taken on line II-II of Figure 8;
Figure 10 is a partially cut-away exploded perspective view of the second embodiment of linear motor shown in Figure 8;
Figure 11 is a partially cut-away perspective view of a modified example of the second embodiment; and
Figure 12 is a cross-sectional view showing a third embodiment of a moving coil linear motor according to the invention.

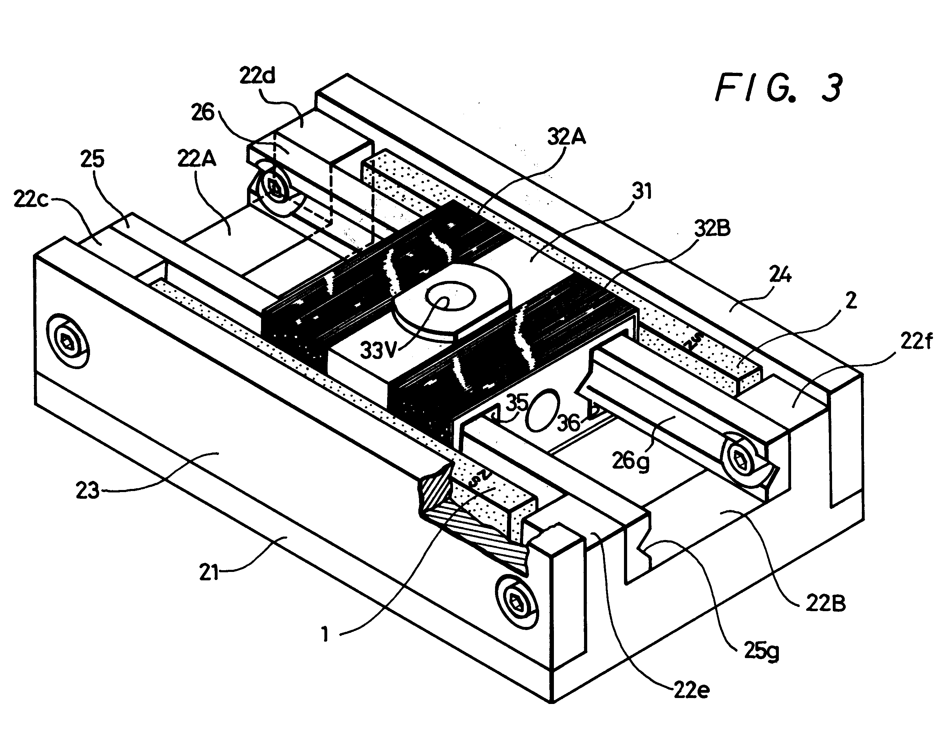

A first embodiment of a linear motor applied to optical disc apparatus is shown in Figures 3 to 7.

Referring to Figures 3 to 7, a rectangular base plate 21 of magnetic material such as low carbon steel (soft steel) has salient portions 22A and 22B in "U" shape in cross section formed in the longitudinal end portions thereof. Magnets 1 and 2 are magnetized in the thickness direction thereof and are secured to yokes 23 and 24, respectively. The ends of the yokes 23 and 24 are respectively fixed to the salient portions 22A and 22B of the base plate 21 with the magnets 1 and 2 facing inwardly, whereby the magnets 1 and 2 are symmetrically located.

Yokes 25 and 26 face the magnets 1 and 2 to form closed magnetic loops which respectively penetrate through-holes 35 and 36 of a bobbin 31. The yokes 25 and 26 are secured to inside faces of respective end portions 22c, 22d and 22e, 22f of the salient portions 22A and 22B of the base plate 21. The upper faces of the salient portions 22A and 22B of the base plate 21 are used as reference faces for fixing the yokes 25 and 26.

On the inner walls of the yokes 25 and 26, there are respectively formed guide grooves 25g and 26g which are of "V" shape in cross section.

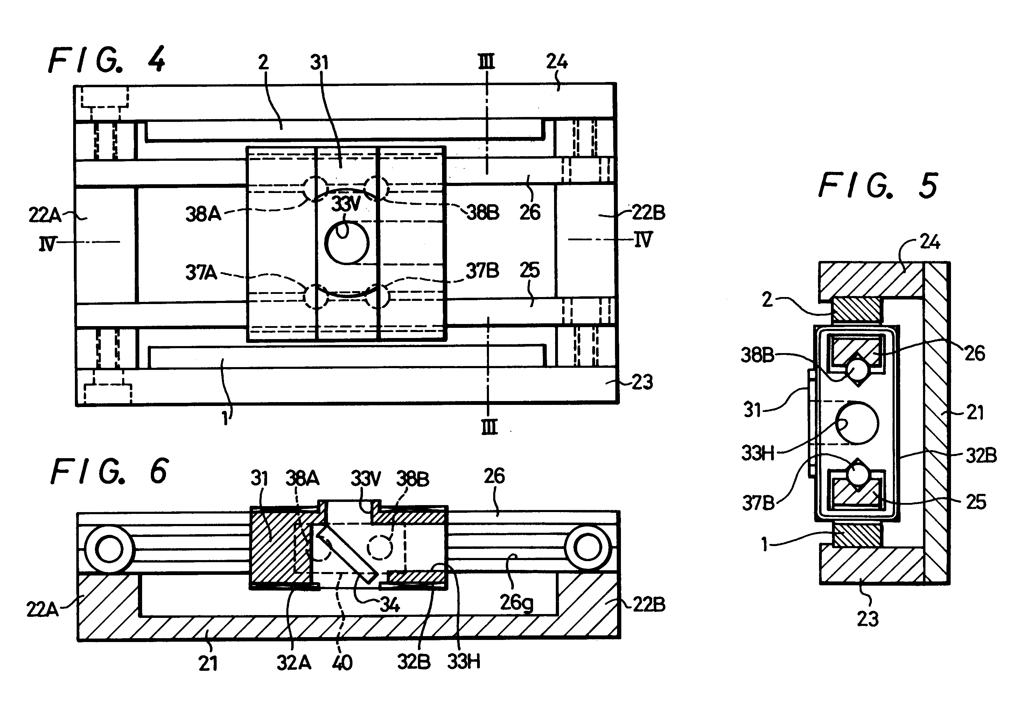

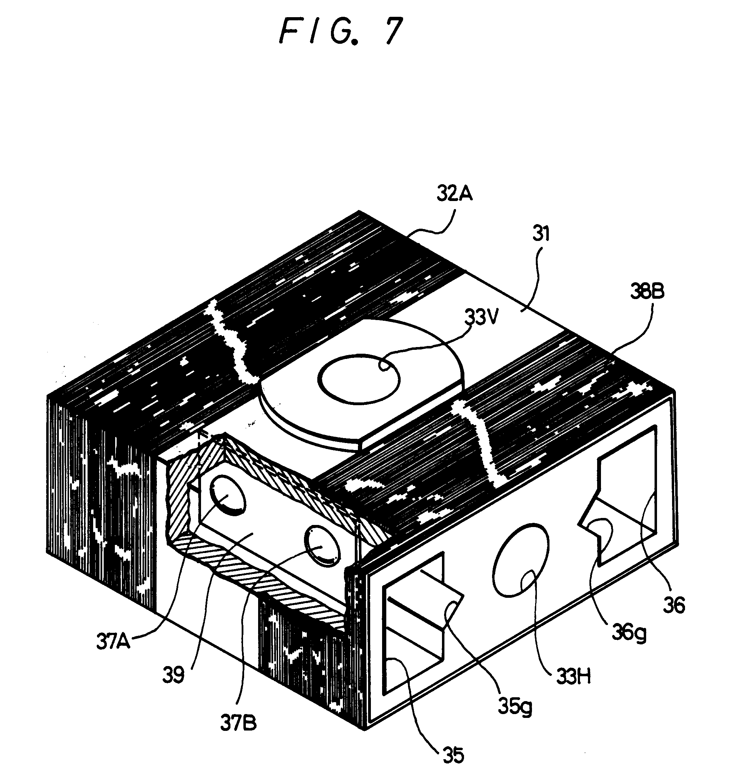

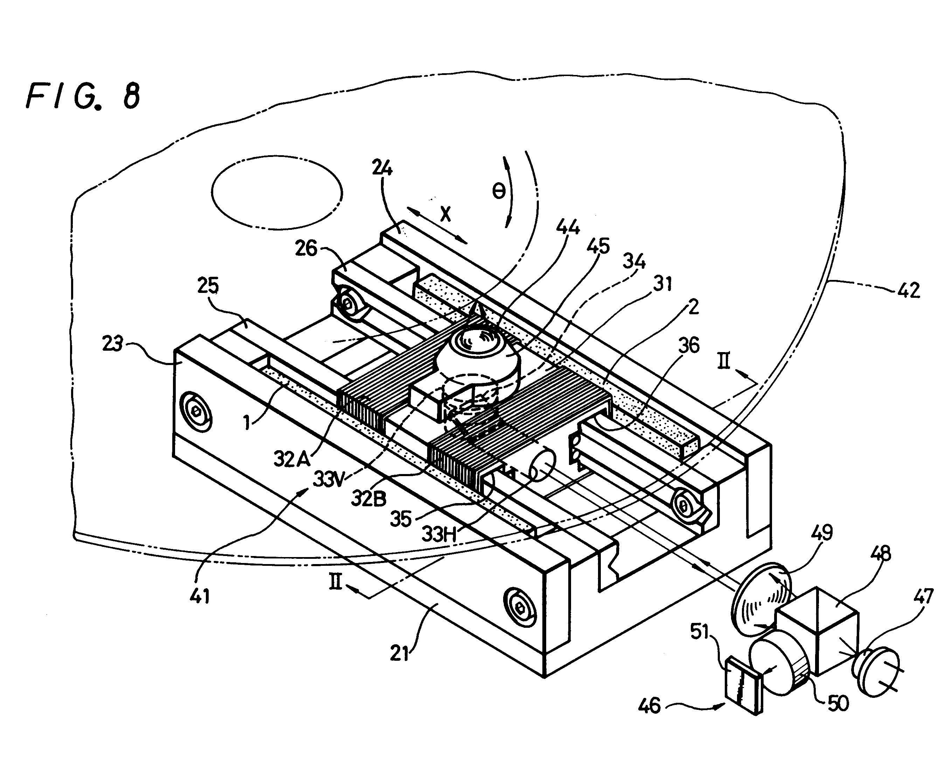

The bobbin 31 is made of synthetic resin and formed substantially as a rectangular solid, and a pair of coils 32A and 32B are wound on end portions thereof. At a location where an aperture 33V opening into the upper surface of the bobbin 31 crosses with an aperture 33H opening into one of its side faces, a reflecting mirror 34 is disposed at an inclination of 45° as shown in Figure 6, to form an optical path passing through the apertures 33V and 33H between an objective lens of the optical pickup and a beam splitter which are omitted from the drawing.

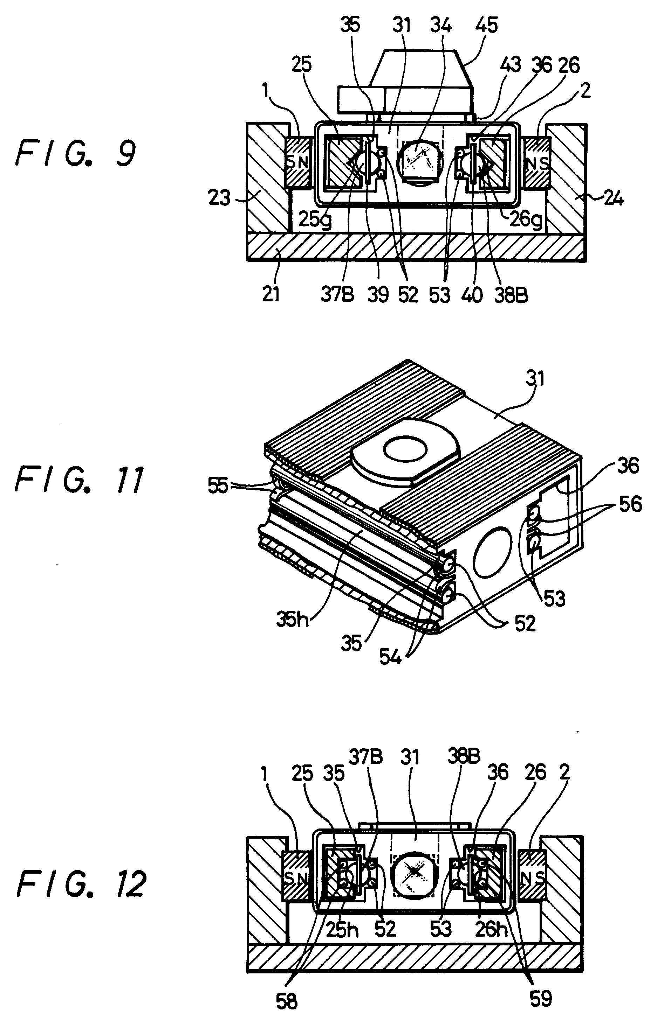

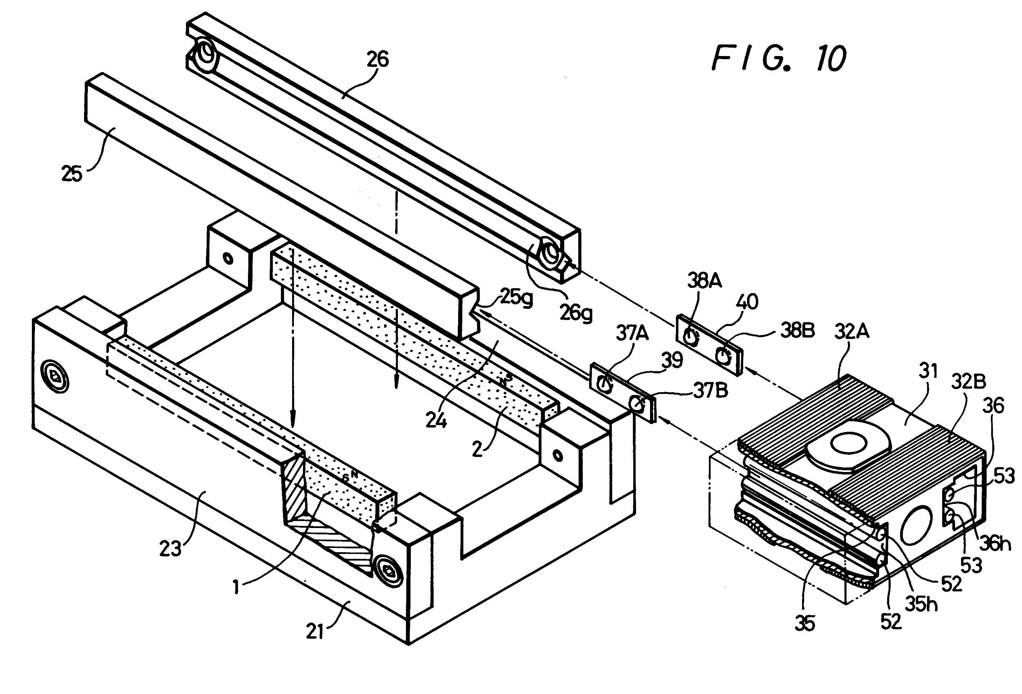

As shown in Figure 7, on the inside wall surfaces of the through-holes 35 and 36, guide grooves 35g and 36g formed in a "V" shape are respectively provided, opposite to the guide grooves 25g and 26g of the yokes 25 and 26.

With the guide groove 35g are engaged a pair of balls 37A and 37B with a predetermined spacing maintained therebetween by a support plate 39. The other guide groove 36g is arranged in similar manner to co-operate with a further pair of balls 38A, 38B.

As mentioned above, the through-holes 35 and 36 of the bobbin 31 are penetrated by the yokes 25 and 26, respectively and the guide grooves 25g and 26g on the yoke side are opposite to the guide grooves 35g and 36g on the bobbin side, respectively.

The spacings between the yokes 25 and 26 and between the through-holes 35 and 36 are appropriately determined, so that, as shown in Figures 4 and 5, the balls 37A, 37B and 38A, 38B of a predetermined diameter are retained between the guide grooves 35g and 36g on the bobbin side and the guide grooves 25g and 26g on the yoke side. Although omitted in the drawing, there are arranged cover plates for preventing the balls from dropping in a manner such that they cover a part of the through-holes 35 and 36 of the bobbin 31.

The diameter of the balls 37A - 38B is selected in accordance with the required moving distance of the bobbin 31.

Since each ball rotates with the movement of the bobbin 31, the moving distance of the centre of the balls is half the moving distance of the bobbin 31.

Thus, in the first embodiment, the bobbin 31 is supported on the yokes 25 and 26 through respective pairs of balls 37A, 37B and 38A, 38B. The yokes 25 and 26 are thus utilized for both formation of a magnetic circuit and guiding of the bobbin 31 and members used exclusively for guiding, which have conventionally been required, are not necessary.

Therefore, in the linear motor of the first embodiment, the moving portion is reduced almost down to the bobbin 31 itself so that it can be immensely reduced in size and weight compared with prior proposals. Thus, the linear motor of the first embodiment can have a higher thrust/weight ratio obtained by energizing the coils 32A and 32B, thereby making it possible to produce high acceleration. Also, the mechanical resonance frequency of the moving system can be made high and therefore the frequency bandwidth of the servo system can be wide, so that its response can be quick. Accordingly, by a combination of high accelerability and quick response, the movement of the moving section over a predetermined distance can be stably carried out in a short time, whereby a so-called high-speed access is enabled when utilized in optical disc apparatus.

While a pair of balls are shown for each of the through-holes in the bobbin 31, however, it is also possible to support the bobbin 31 by a total of three balls by using only one ball in one or other of the through-holes.

Although the linear motor of the first embodiment can produce an advantage in that the bobbin 31 can be reduced in size and weight by utilizing the yokes 25 and 26 as the guide shafts so that stable operation at high speed can be obtained, it is necessary to finish the V-shaped guide grooves 25g, 26g, 35g and 36g to guide the balls 37A, 37B, 38A and 38B interposed between the bobbin 31 and the yokes 25 and 26 with profile irregularity of approximately 0.2µ m - 0.1µ m. Such fine finishing requires difficult operations and a considerable number of working processes, thereby presenting the problem that the manufacturing cost thereof is elevated.

A second embodiment can solve the above problem as well as achieving the same objects and effects as the first embodiment. Referring to Figures 8 and 9, wherein parts corresponding to those in the first embodiment are designated with the same reference numerals, a moving coil linear motor 41 of the second embodiment is employed for moving the objective lens of an optical pickup provided in optical disc apparatus. The linear motor 41 is disposed beneath an optical disc 42 pivoted rotatably in the direction ϑ. The linear motor 41 is constructed such that the yokes 25 and 26 made of magnetic material are respectively disposed opposite to the magnets 1 and 2 magnetized in the thickness direction thereof and respectively penetrate the through-holes 35 and 36 formed through the bobbin 31 on which the coils 32A and 32B are wound. The bobbin 31 may have a central portion made of metal, such as aluminium, so long as at least its outer peripheral portion is made of non-magnetic material. The L-shaped aperture formed by the apertures 33V and 33H is formed in a portion of the bobbin 31 located between the pair of through-holes 35 and 36. The reflecting mirror 34 for changing the direction of the optical path is fixed at the angle of the combined apertures 33V and 33H. Further, a moving portion, for example, a focus adjusting mechanism, of an optical pickup 45 having an objective lens 44 is attached through a mount 43 to the exit side of the aperture 33V. An optical system 46, which comprises a laser diode 47, a beam splitter 48, a collimator lens 49, a light receiving optical system 50 and a photo diode 51 is in the extended direction of the aperture 33H.

In the linear motor 41 of the second embodiment, as shown in Figure 10, grooves and are formed in the inner side walls of the respective through-holes 35 and 36 of the bobbin 31 and pairs of shafts 52 and 53 are attached on the inner side walls thereof and form grooves 35h and 36h therebetween. The V-shaped guiding grooves 25g and 26g are formed in the face of the respective yokes 25 and 26 opposite the shafts 52 and 53. The shafts 52 and 53 are obtained by polishing ordinary rods made of, for example, ceramics or stainless steel and can be fixed on the inner side walls of the grooves in the bobbin 31 by a bonding agent. Then, the pair of balls 37A and 37B are interposed between the pair of shafts 52 and the guide groove 25g of the yoke 25 with an interval maintained constant by the support plate 39. Also, the pair of balls 38A and 38B are interposed between the pair of shafts 53 and the guide groove 26g of the yoke 26 with an interval maintained constant by a support plate 40. The balls are preferably made of non-magnetic material such as stainless steel, ceramics, ruby or sapphire.

In the second embodiment, the bobbin 31 is supported by the yokes 25 and 26 through the balls 37A, 37B, 38A and 38B, so that the yokes 25 and 26 form a closed magnetic path with the yokes 23 and 24 attached to the base 21 and serve also as guide shafts for the bobbin 31. Therefore, it is not necessary additionally to provide a slide base for guide shafts for the bobbin 31, so that the bobbin 31 of the second embodiment can be further reduced in size and weight, thereby making it possible stably to drive it at high speed along the longitudinal direction (the direction X indicated in Figure 8) of the yokes 25 and 26. This means that the linear motor of the second embodiment, if applied to an optical disc apparatus, can provide a faster access.

Also, in the linear motor of the second embodiment, the balls 37A, 37B, 38A and 38B are respectively guided by the pairs of shafts 52 and 53 in the pair of through-holes 35 and 36 of the bobbin 31. The shafts 52 and 53 can be highly accurate shafts mass-produced at a low cost. Therefore, it is not necessary to provide the pair of through-holes 35 and 36 of the bobbin 31 with highly accurate machined guide grooves extending over the whole longitudinal length thereof on their inner side walls, thus making it possible correspondingly to reduce the number of the working operations and the manufacturing cost.

The shafts 52 and 53 shown in Figure 8 are fixed on the inner side walls of the respective grooves in the bobbin by a bonding agent. However, they may be fixed by calking as shown in Figure 11. Specifically, in the example of Figure 11, the inner portion of the bobbin 31 is made of non-magnetic light metal and the ends of the groove of the through-hole 35 in the bobbin 31 are provided with protrusions 54 and 55, respectively. The protrusions 54 and 55 are calked by a tool, not shown, after the pair of shafts 52 are attached on the inner side wall of the groove, whereby the pair of the shafts 52 can be stably maintained. In the same manner, the groove of the through-hole 36 of the bobbin 31 is provided at the ends thereof with protrusions 56 and 57 (the protrusion 57 is not shown in Figure 11), and the pair of shafts 53 are fixed by calking the protrusions 56 and 57 to form the groove 36h therebetween to receive the ball 38B.

Next, a third embodiment of the linear motor according to the invention will be described with reference to Figure 12. As illustrated in Figure 12, a groove is formed on the inner side wall of the yoke 25 opposite the pair of shafts 52 fixed on the inner wall of the through-hole 35 formed through the bobbin 31, and a pair of shafts 58 are mounted therein to form a groove 25h therebetween. Thus, the pair of the balls 37A and 37B are interposed between the pair of shafts 52 and the pair of shafts 58. In the same manner, a groove is formed on the inner wall of the yoke 26, and a pair of shafts 59 are mounted therein to form a groove 35h therebetween. Then, the pair of the balls 38A and 38B are interposed between the pair of shafts 53 on the bobbin side and the pair of the shafts 59 on the yoke side. Thus, the bobbin 31 is movably supported by the yokes 25 and 26 through the pairs of balls 37A, 37B, and 38A, 38B. The rest of the construction of the third embodiment is the same as the second embodiment shown in Figure 8 so that the detailed explanation thereof will be omitted.

According to the third embodiment shown in Figure 12, since the guiding planes for the balls 37A, 37B, 38A and 38B are all formed of cheap shafts 52, 58, 53 and 59, it is not necessary to form highly accurate guiding planes over the whole longitudinal length of the yokes 25 and 26, thereby presenting an advantage that the manufacturing cost can be further reduced.

The number of balls interposed between the bobbin 31 and the yokes 25 and 26 may be changed, for example, two balls can be utilized at the side where the yoke 25 is provided and only one ball on the side where the yoke 26 is provided.

The through-holes of the bobbin on which the coils are wound and the yokes penetrating the through-holes are provided with guide grooves for the rolling elements, and the bobbin is supported on the yokes through the rolling elements, so that the yokes which are constituent members of the magnetic circuit can be utilized to guide the bobbin, thereby making it possible to reduce the moving section in size and weight and accordingly provide a moving coil type linear motor which can operate stably at high speed.

## Claims

1. A moving coil linear motor in which two parallel spaced yokes (25, 26) are arranged each parallel and opposite to a respective magnet (1, 2) magnetized in the thickness direction thereof, each of the yokes (25, 26) penetrates a respective through-hole (35, 36) of a bobbin (31) on which at least one coil (32A, 32B) is wound, and the coil or coils (32A, 32B) can be energized to drive the bobbin (31):
characterized in that surfaces of the yokes (25, 26) and opposing surfaces of the through-holes (35, 36) of the bobbin (31) are spaced apart and are each provided with a respective guide groove (25g, 26g, 35g, 36g, 25h, 26h, 35h, 36h) extending longitudinally of the respective surface, rolling elements (37A, 37B, 38A, 38B) are received in the guide grooves (25g, 26g, 35g, 36g, 25h, 26h, 35h, 36h), and the bobbin (31) is supported on the yokes (25, 26) by the rolling elements (37A, 37B, 38A, 38B).

2. A moving coil linear motor according to claim 1, wherein the guide groove (25g, 26g, 25h, 26h) in each yoke (25, 26) is formed in a face of the yoke which faces away from the respective magnet (1, 2).

3. A moving coil linear motor according to claim 1 or claim 2, wherein at least one of the guide grooves (25g, 26g, 35g, 36g), formed in the yoke (25, 26) and the bobbin (31) has a V-shape cross-section.

4. A moving coil linear motor according to any one of claims 1 to 3, wherein at least one of the guide grooves (25h, 26h, 35h, 36h) formed in the yoke (25, 26) and the bobbin (31) is defined by a pair of spaced circular section members (52, 53, 58, 59).

5. A moving coil linear motor according to any one of claims 1 to 4, wherein the rolling elements are formed as balls (37A, 37B, 38A, 38B), at least the surfaces of which have a non-magnetic property.

6. A moving coil linear motor according to claim 5, including a holder (39, 40) to maintain a longitudinal spacing between a pair of the balls (37A, 37B, 38A, 38B) constant.

7. A moving coil linear motor according to claim 1, comprising mounting yokes (23, 24) each mounting a respective one of the magnets (1, 2) and wherein the two parallel spaced yokes (25, 26) are attached to the mounting yokes (23, 24) so as respectively to oppose the magnets (1, 2); and the at least one coil (32A, 32B) wound on the bobbin (31) can generate magnetic flux which intersects magnetic flux from the magnets (1, 2).

## Patentansprüche

1. Linearmotor mit beweglicher Spule, bei welchem zwei parallele, räumlich getrennte Joche (25, 26) angeordnet sind, jedes parallel und einem jeweiligen Magneten (1, 2) gegenüberliegend, der in Richtung seiner Dicke magnetisiert ist, wobei jedes der Joche (25, 26) ein jeweiliges Durchgangsloch (35, 36) eines Spulenkörpers (31) durchdringt, auf welchem mindestens eine Spule (32A, 32B) gewickelt ist, und wobei der Spule oder den Spulen (32A, 32B) Energie zugeführt werden kann, um den Spulenkörper (31) anzutreiben, **dadurch gekennzeichnet**, daß Oberflächen der Joche (25, 26) und gegenüberliegende Oberflächen der Durchgangslöcher (35, 36) des Spulenkörpers (31) einzeln mit Abstand angeordnet sind, und jede mit einer jeweiligen Führungsnut (25g, 26g, 35g, 36g, 25h, 26h, 35h, 36h) versehen ist, die sich in Längsrichtung der jeweiligen Oberfläche erstreckt, daß in den Führungsnuten (25g, 26g, 35g, 36g, 25h, 26h, 35h, 36h) Wälzkörper (37A, 37B, 38A, 38B) aufgenommen sind, und daß der Spulenkörper (31) durch die Walzkörper (37A, 37B, 38A, 38B) auf den Jochs (25, 26) abgestützt ist.

2. Linearmotor mit beweglicher Spule nach Anspruch 1, bei dem die Führungsnut (25g, 26g, 25h, 26h) in jedem Joch (25, 26) in einer Vorderseite des Jochs ausgebildet ist, welche von dem jeweiligen Magneten (1, 2) fortzeigt.

3. Linearmotor mit beweglicher Spule nach Anspruch 1 oder 2, bei dem mindestens eine der in dem Joch (25, 26) und dem Spulenkörper (31) ausgebildeten Führungsnuten (25g, 26g, 35h, 35g) einen V-förmigen Querschnitt aufweist.

4. Linearmotor mit beweglicher Spule nach Anspruch 1 bis 3, bei dem mindestens eine der in dem Joch (25, 26) und dem Spulenkörper (31) ausgebildeten Führungsnuten (25h, 26h, 35h, 36h) durch ein Paar von räumlich getrennten Bauteilen (52, 53, 58, 59) mit kreisförmigem Querschnitt bestimmt ist.

5. Linearmotor mit beweglicher Spule nach Anspruch 1 bis 4, bei den die Wälzkörper als Kugeln (37A, 37B, 38A, 38B) ausgebildet sind, wobei mindestens deren Oberflächen eine nichtmagnetische Eigenschaft besitzen.

6. Linearmotor mit beweglicher Spule nach Anspruch 5, welcher einen Halterung (39, 40) enthält, um eine dauernde räumliche Trennung in Längsrichtung zwischen einem Paar der Kugeln (37A, 37B, 38A, 38B) aufrechtzuerhalten.

7. Linearmotor mit beweglicher Spule nach Anspruch 1, welcher montierte Joche (23, 24) aufweist, wobei an jedem jeweils ein einziger der Magnete (1, 2) angebracht ist, und bei dem die zwei parallelen, räumlich getrennten Joche (25, 26) an den montierten Jochs (23, 24) befestigt sind, um jeweils den Magneten (1, 2) gegenüberzuliegen; und bei welchem mindestens eine auf den Spulenkörper (31) gewickelte Wicklung (32A, 32B) einen magnetischen Fluß erzeugen kann, welcher den magnetischen Fluß der Magnete (1, 2) schneidet.

## Revendications

1. Moteur linéaire à bobine mobile, dans lequel deux culasses parallèles distantes (25, 26) sont disposées afin qu'elles soient parallèles et opposées à un aimant respectif (1, 2) aimanté dans la direction de son épaisseur, chacune des culasses (25, 26) passant dans un trou débouchant respectif (35, 36) d'un bobinot (31) sur lequel est enroulée au moins une bobine (32A, 32B), la bobine ou les bobines (32A, 32B) pouvant être excitées pour l'entraînement du bobinot (31),
caractérisé en ce que des surfaces des culasses (25, 26) et des surfaces opposées des trous débouchants (35, 36) du bobinot (31) sont séparées et ont chacune une gorge respective de guidage (25g, 26g, 35g, 36g, 25h, 26h, 35h, 36h) disposée longitudinalement sur la surface respective, des éléments roulants (37A, 37B, 38A, 38B) sont logés dans les gorges de guidage (25g, 26g, 35g, 36g, 25h, 26h, 35h, 36h), et le bobinot (31) est supporté sur les culasses (25, 26) par les éléments roulants (37A, 37B, 38A, 38B).

2. Moteur linéaire à bobine mobile selon la revendication 1, dans lequel la gorge de guidage (25g, 26g, 25h, 26h) de chaque culasse (25, 26) est formée dans une face de culasse tournée du côté opposé à l'aimant respectif (1, 2).

3. Moteur linéaire à bobine mobile selon la revendication 1 ou 2, dans lequel l'une au moins des gorges de guidage (25g, 26g, 35g, 36g), formée dans la culasse (25, 26) et le bobinot (31), a une section en V.

4. Moteur linéaire à bobine mobile selon l'une quelconque des revendications 1 à 3, dans lequel l'une au moins des gorges de guidage (25h, 26h, 35h, 36h)formées dans la culasse (25, 26) et le bobinot (31) est délimitée par une paire d'organes distants à section circulaire (52, 53, 58, 59).

5. Moteur linéaire à bobine mobile selon l'une quelconque des revendications 1 à 4, dans lequel les éléments sont formés de billes (37A, 37B, 38A, 38B) dont les surfaces au moins ont une propriété non magnétique.

6. Moteur linéaire à bobine mobile selon la revendication 5, comprenant un organe de support (39, 40) destiné à maintenir un espacement longitudinal constant entre les billes (37A, 37B, 38A, 38B) d'une paire.

7. Moteur linéaire à bobine mobile selon la revendication 1, comprenant des culasses de montage (23, 24) supportant chacune un aimant respectif (1, 2), et les deux culasses parallèles distantes (25, 26) sont fixées aux culasses de montage (23, 24) afin qu'elles soient respectivement en face des aimants (1, 2), et ladite bobine au moins (32A, 32B) enroulée sur le bobinot (31) peut créer un flux magnétique qui recoupe le flux magnétique des aimants (1, 2).
